(19) Europäisches Patentamt
European Patent Office
Office européen des brevets

(11) **EP 1 211 844 B1**

(12) **FASCICULE DE BREVET EUROPEEN**

(45) Date de publication et mention de la délivrance du brevet:
**03.01.2007   Bulletin 2007/01**

(51) Int Cl.:
**H04L 12/24** *(2006.01)*

(21) Numéro de dépôt: **01403040.7**

(22) Date de dépôt: **27.11.2001**

(54) **Procédé de dimensionnement d'un réseau de transmission à commutation par paquets de type déterministe**

Designmethode eines Paketnetzes von der deterministischen Art

Design method of a network of packet transmission of the deterministic type

(84) Etats contractants désignés:
**DE ES FR GB**

(30) Priorité: **01.12.2000   FR 0015606**

(43) Date de publication de la demande:
**05.06.2002   Bulletin 2002/23**

(73) Titulaire: **Thales**
**75008 Paris (FR)**

(72) Inventeurs:
• **Ambiehl, Yves,**
  **Thales,**
  **Intellectual Property**
  **94117 Arcueil Cedex (FR)**
• **Yvetot, Ahlam,**
  **Thales,**
  **Intellectual Property**
  **94117 Arcueil Cedex (FR)**
• **Sannino, Christian,**
  **Thales,**
  **Intellectual Property**
  **94117 Arcueil Cedex (FR)**

(74) Mandataire: **Beylot, Jacques**
**Marks & Clerk France**
**31-33 Avenue Aristide Briand**
**94117 Arcueil Cédex (FR)**

(56) Documents cités:
**EP-A- 0 579 472**

• **SOMERS F ET AL: "INTELLIGENT RESOURCE DIMENSIONING IN ATM NETWORKS" PROCEEDINGS OF THE INTERNATIONAL SWITCHING SYMPOSIUM,DE,BERLIN, VDE VERLAG, vol. SYMP. 15, 23 avril 1995 (1995-04-23), pages 62-66, XP000495626 ISBN: 3-8007-2093-0**

**EP 1 211 844 B1**

**Description**

La présente invention concerne les réseaux de transmission à commutation par paquets de type déterministe.

Un réseau de transmission à commutation par paquets permet l'échange de données sous forme de paquets entre différentes entités géographiquement dispersées. Son intérêt est de réduire le nombre de liaisons physiques de transmission nécessaires pour l'acheminement des informations en permettant de partager dans le temps une ou plusieurs liaisons physiques entre plusieurs flux d'informations sur certaines parties de leurs trajets.

Un réseau de transmission à commutation par paquets est constitué d'un ensemble de noeuds d'interconnexion réunis par des liaisons de transmission câblées ou non et constituant un maillage de l'espace où sont réparties les entités ayant à communiquer.

Un paquet se présente sous la forme d'un train de bits dont la constitution respecte une organisation stricte définie par un protocole de réseau avec différentes parties ou champs dont certains sont réservés aux informations de service nécessaires à son acheminement telles que les identités de l'entité expéditrice et de l'entité destinataire, et d'autres aux données à transmettre.

Un paquet est introduit dans le réseau de transmission à l'un de ses noeuds d'interconnexion en relation directe avec l'entité expéditrice au moyen d'une liaison physique de transmission telle qu'un câble ou autre. Il chemine jusqu'au premier noeud d'interconnexion à travers la liaison physique raccordant ce premier noeud à l'entité expéditrice. Arrivé à ce premier noeud d'interconnexion il est redirigé sur une autre liaison physique de transmission. Cette autre liaison physique de transmission le fait progresser au sein du réseau de transmission vers l'entité destinataire et lui permet d'atteindre soit l'identité destinataire, soit un autre noeud de connexion du réseau plus proche de l'identité destinataire qui le redirige à son tour sur une autre liaison physique de transmission et ainsi de suite. En final, le paquet suit, jusqu'à l'entité destinataire, un chemin dit virtuel parce qu'il n'est matérialisé que le temps de la transmission du paquet. Ce chemin virtuel emprunte une chaîne plus ou moins longue de liaisons physiques de transmission réunies à leurs extrémités par des noeuds d'interconnexion. Chaque noeud d'interconnexion assure, à son niveau, le routage des paquets qui lui parviennent, entre les différentes liaisons physiques de transmission qui lui sont directement raccordées, ce routage étant mené à partir des informations de service contenues dans les paquets. Un exemple très répandu de réseau à commutation par paquets est donné par les réseaux Ethernet commutés.

Dans un réseau de transmission à commutation par paquets, l'activité des noeuds d'interconnexion est fortement variable et dépend des cheminements des paquets. On peut ainsi se retrouver, à certains instants, avec des noeuds d'interconnexion proches de la saturation ou même saturés et provoquant la perte de paquets, alors que d'autres sont sous exploités. Cela a conduit à surveiller en temps réel les activités des différents noeuds de connexion et à adopter diverses procédures de reroutage local des paquets en vue d'une meilleure répartition des tâches entre les différents noeuds d'interconnexion. La contrepartie de ce reroutage local est que le chemin virtuel suivi par un paquet de son entité expéditrice à son entité destinatrice n'est plus complètement défini à l'avance, ce qui rend la transmission moins fiable et surtout ajoute un aléa au temps de transit d'une information à travers le réseau. Dans un certain nombre de situations, où la fiabilité de la transmission et le temps de transit des informations sont des données critiques, comme dans le cas d'un réseau de transmission reliant des équipements d'un aéronef, ce reroutage local est évité, chaque noeud de connexion renfermant une table définissant de manière stricte, le port de sortie que doit emprunter un paquet en fonction de son port d'entrée et des adresses expéditeur et destinataire. Le réseau de transmission à commutation par paquets est alors dit "déterministe" puisque les chemins virtuels que peuvent emprunter les paquets sont figés et nécessitent pour être modifiés une reprogrammation des noeuds d'interconnexion et que le délai de traversée de chaque noeud d'interconnexion est borné.

Il ne suffit cependant pas que le réseau de transmission à commutation par paquets soit de type déterministe pour garantir sa fiabilité, il faut encore qu'il ait un dimensionnement adapté aux flux d'informations à transmettre, c'est-à-dire qu'il ne présente aucune possibilité d'engorgement au niveau de ses noeuds d'interconnexion.

Un noeud d'interconnexion peut être symbolisé par un dispositif présentant :

- un banc de ports d'entrée $E_j$, i allant de 1 à n, un banc de ports de sortie $S_j$, j allant de 1 à m,
- un banc de multiplexeurs $P_j$, un par port de sortie $S_j$, chaque multiplexeur $P_j$ étant affecté à un port de sortie déterminé $S_j$ et reliant à son port de sortie d'affectation $S_j$ tous les ports d'entrée $E_i$ susceptibles de lui être reliés,
- un banc de $P_j$ mémoires $F_j$ de type FIFO (de l'anglo-saxon "First In First Out) intercalées entre les sorties des multiplexeurs et les ports de sorties $S_j$ pour gérer des files d'attente à l'aplomb des ports de sortie et régulariser les débits des paquets sur les liaisons physiques de transmission raccordées aux ports de sortie $S_j$, et
- un ou plusieurs automates de routage assurant la commande du ou des différents multiplexeurs en fonction des informations de service contenues dans les paquets.

Cette représentation d'un noeud d'interconnexion n'a pour but que de faciliter la compréhension. Elle ne préjuge pas de l'architecture réelle dans laquelle il peut n'y avoir qu'un seul multiplexeur central qui aiguille les flux arrivant,des ports d'entrée vers les bons ports de sortie.

Le problème de l'engorgement d'un noeud d'interconnexion se ramène à celui de la gestion des files d'attente, c'est-à-dire du taux d'occupation et des risques de débordement des mémoires FIFO disposées à l'aplomb de ses ports de sortie. Le réseau de transmission doit être dimensionné de manière que les mémoires FIFO de ses différents noeuds d'interconnexion ne puissent pas déborder et que celles-ci aient des capacités et des taux de remplissage uniformes, le délai d'acheminement d'un paquet au niveau d'un noeud d'interconnexion étant constitué essentiellement par son temps de séjour dans la file d'attente du port de sortie qu'il emprunte.

Le dimensionnement d'un réseau de transmission à commutation par paquets de type déterministe se fait par dégrossissage. On part d'une topologie de réseau supposée adaptée à la disposition géographique des équipements à relier et aux importances des flux d'informations à échanger, cette topologie de réseau consistant dans la définition de chemins virtuels VC pour l'acheminement des différents flux d'information, et du maillage de noeuds d'interconnexion reliés entre eux et aux équipements par des liaisons physiques de raccordement qui supportent ces chemins virtuels. On vérifie alors que le nombre, les capacités et les dispositions des noeuds d'interconnexion et des liaisons physiques de transmission reliant les noeuds d'interconnexion entre eux et aux entités expéditrices et destinataires permettent le passage, sans problème, de l'ensemble des chemins virtuels prévus et l'on retouche la topologie du réseau tant que cette vérification n'est pas concluante.

Les paquets d'un flux d'informations provenant d'une même entité expéditrice et occupant un même chemin virtuel VC occupent à l'origine des fenêtres temporelles périodiques très espacées par rapport aux capacités de transmission des liaisons physiques utilisées par un réseau. Cependant, dès leur passage par un premier noeud d'interconnexion, ils se retrouvent en concurrence avec des paquets appartenant à d'autres flux d'informations et suivant d'autres chemins virtuels, et peuvent de ce fait être contraints à patienter dans des files d'attente au niveau du port de sortie qu'ils doivent emprunter. Un tel passage par une file d'attente perturbe la régularité du débit initial des paquets. Cette perturbation ou gigue s'accroît au fil des noeuds de connexion traversés et peut aller jusqu'à provoquer des agrégats de paquets ou bursts le long des chemins virtuels. Ces agrégats de paquets entraînent, lorsqu'ils franchissent un noeud de connexion, une augmentation passagère de l'activité de ce dernier qui est absorbée grâce aux files d'attente et qui est génératrice de nouveaux retards et d'un éventuel grossissement des agrégats. Ce phénomène d'agrégats doit être pris en compte lors du dénombrement des chemins virtuels et lors de la détermination des capacités des mémoires FIFO des noeuds d'interconnexion car il joue sur le délai maximum de transmission d'un chemin virtuel et sur le remplissage des files d'attente dans les noeuds d'interconnexion.

Le document 'Intelligent Resource Dimensioning in ATM Networks' INTERNATIONAL SWITCHING SYMPOSIUM, Berlin, 15-23 avril 1995, évoque l'utilisation d'Intelligence Artificielle pour le dimensionnement des réseaux, mais ne s'intéresse pas aux problèmes générées dans les files d'attente.

La présente invention a pour but un procédé de dimensionnement d'un réseau de transmission à commutation par paquets de type déterministe prenant en compte le phénomène d'agrégation des paquets au cours de leurs progressions dans le réseau le long d'un chemin virtuel.

Elle a pour objet un procédé de dimensionnement d'un réseau de transmission à commutation par paquets de type déterministe desservant des d'équipements à mettre en relation et comportant des noeuds d'interconnexion reliés entre eux et aux équipements par des liaisons physiques de raccordement, ce procédé consistant à établir une liste des flux d'informations à acheminer entre les différents équipements reliés par le réseau, proposer une topologie de réseau supposée adaptée à la disposition géographique des équipements à relier par le réseau et aux importances des flux d'informations à échanger entre les équipements, ladite topologie consistant dans la définition de chemins virtuels pour l'acheminement des différents flux d'information, et d'un maillage de noeuds d'interconnexion reliés entre eux et aux équipements par des liaisons physiques de raccordement qui supportent ces chemins virtuels, estimer, au niveau de chaque noeud de connexion, les retards maximum introduits sur les transmissions des paquets par les phénomènes de gigue provoqués par eux-mêmes et par les noeuds de connexion déjà franchis par les paquets, vérifier que ces retards maximum sont compatibles avec des limites imposées et retoucher la topologie du réseau tant que cette compatibilité n'est pas obtenue,

ce procédé étant caractérisé en ce que, dans un réseau où les paquets ont tous la même vitesse d'acheminement V sur les liaisons physiques de raccordement, l'estimation des retards maximum introduits par le phénomène de gigue dans les transmissions des paquets sur les différents chemins virtuels passe par la détermination de la composante de gigue $\Delta J_{K,j}$ ajoutée par un noeud d'interconnexion K au niveau de l'un de ses ports de sortie $S_j$ en relation, par l'intermédiaire d'une mémoire tampon accueillant une file d'attente et d'un dispositif de multiplexage, avec N flux provenant des ports d'entrée $E_i$, cette détermination de la composante de gigue $\Delta J_{K,j}$ s'effectuant, dans le cas où chaque flux de paquets d'un chemin virtuel $VC_l$ entrant dans la mémoire tampon par un port d'entrée $E_i$ présente, entre un agrégat de paquets et le paquet ou l'agrégat de paquets qui le suit, un intervalle de temps minimum suffisant pour permettre un vidage de la mémoire tampon après réception d'un agrégat de paquets et avant réception du paquet suivant l'agrégat, par mise en oeuvre de la relation

$$\Delta J_{K\,j} = \frac{Q}{V} = \frac{\sum_{l=1}^{N} B_l - Sup\{B_l\}}{V}$$

: V étant la vitesse d'acheminement de la liaison physique de raccordement connectée au port de sortie $S_j$ et Q étant la quantité maximale de bits de la file d'attente estimée à partir de la relation :

$$Q = \sum_{l=1}^{N} B_l - Sup\{B_l\}$$

N étant le nombre de flux de paquets susceptibles de converger vers le port de sortie considéré, c'est-à-dire le nombre de flux traversant le noeud d'interconnexion et convergeant vers le port de sortie $S_j$ considéré, ceci en faisant l'hypothèse qu'un flux de paquets est associé à un chemin virtuel $VC_l$, $B_l$ la taille maximale en bits d'un agrégat de paquets susceptible d'arriver sur un $VC_l$ par un port d'entrée $E_i$, taille maximale que l'on peut également exprimer par la relation :

$$B_l = M_l \times q_{max}$$

$M_l$ étant le nombre maximum de paquets dans un agrégat de paquets susceptible d'arriver sur un chemin virtuel $VC_l$ par un port d'entrée $E_i$ et $q_{max}$ étant le nombre maximum de bits d'un paquet.

Avantageusement, la taille maximale $B_i$ en bits d'un agrégat de paquets susceptible de se présenter sur un chemin virtuel $VC_l$ par un port d'entrée $E_i$ d'un noeud d'interconnexion du réseau est prise égale à la taille du plus gros agrégat de paquets $B_{VCl,i,k}$ susceptible de se présenter sur ce chemin virtuel $VC_l$ empruntant le port d'entrée $E_i$ du noeud de connexion K considéré :

$$B_l = Sup\{B_{VC_{l,i,k}}\}$$

la taille du plus gros agrégat de paquets $B_{VCl,i,k}$ susceptible de se présenter sur un chemin virtuel $VC_l$ empruntant le port d'entrée $E_i$ du noeud de connexion k considéré étant obtenue à partir du système de relation :

$$\begin{cases} B_{VC_{l,i,k}} = 1 + \text{partie entière}\left(\dfrac{\sum_{k=1}^{K-1}\Delta J_{l,k}}{T_l}\right) \times q_{max} & pour \quad \sum_{k=1}^{K-1}\Delta J_{l,k} \geq T_l \quad et \quad \sum_{k=1}^{K-1}\Delta J_{l,k} < T_l - \dfrac{q_{max}}{V} \\ \\ B_{VC_{l,i,k}} = 2 & pour \quad T_l - \dfrac{q_{max}}{V} \leq \sum_{k=1}^{K-1}\Delta J_{l,k} < T_l \end{cases}$$

K étant ici, le nombre de noeuds de connexion traversés par un chemin virtuel considéré et l'indice k repérant les noeuds de connexion traversés par un chemin virtuel considéré dans l'ordre où ils sont traversés par les paquets, les différentes composantes de gigue $\Delta J_{l,k}$ se déterminant de proche en proche en parcourant les différents chemins virtuels de leurs origines à leurs extrémités.

Avantageusement, une fois déterminées les composantes de gigue ajoutées par les différents noeuds d'interconnexion aux niveaux de leurs différents ports de sortie, on vérifie, sur chaque chemin virtuel $VC_l$, que les intervalles de temps minimum $\Delta T_{l,K}$ entre le plus gros agrégat de paquets et le prochain paquet arrivant au plus tôt aux niveaux des divers noeuds d'interconnexion rencontrés, obtenus par la relation

$$\Delta T_{l,K} = T_l - Reste\left(\frac{\displaystyle\sum_{k=1}^{K}\Delta J_{l,k}}{T_l}\right) - \frac{B_{VC_{l,k,j}}}{V}$$

sont suffisants pour éviter tout problème d'engorgement des files d'attente causé par des salves trop rapprochées, c'est-à-dire qu'ils satisfont soit l'inégalité :

$$\Delta T \ge (M - 1)\frac{q_{max}}{V}$$

M étant un entier positif représentant le nombre de paquets de la deuxième salve au plus égal au nombre de chemins virtuels empruntant le port de sortie de noeud d'interconnexion considéré, choisi en fonction du degré de sûreté exigé pour la transmission, soit l'inégalité pour un chemin virtuel $VC_K$ :

$$\Delta T_k \ge (M - 1)\frac{q_{max}}{V} + \frac{\underset{1\le l\le N}{Sup}\{\text{Taille agrégat max}_{VC_l}\}}{V} - \frac{\text{Taille agrégat max}_{VC_k}}{V}$$

D'autres caractéristiques et avantages de l'invention ressortiront de la description ci-après, d'un mode de réalisation donné à titre d'exemple. Cette description sera faite en regard du dessin dans lequel :

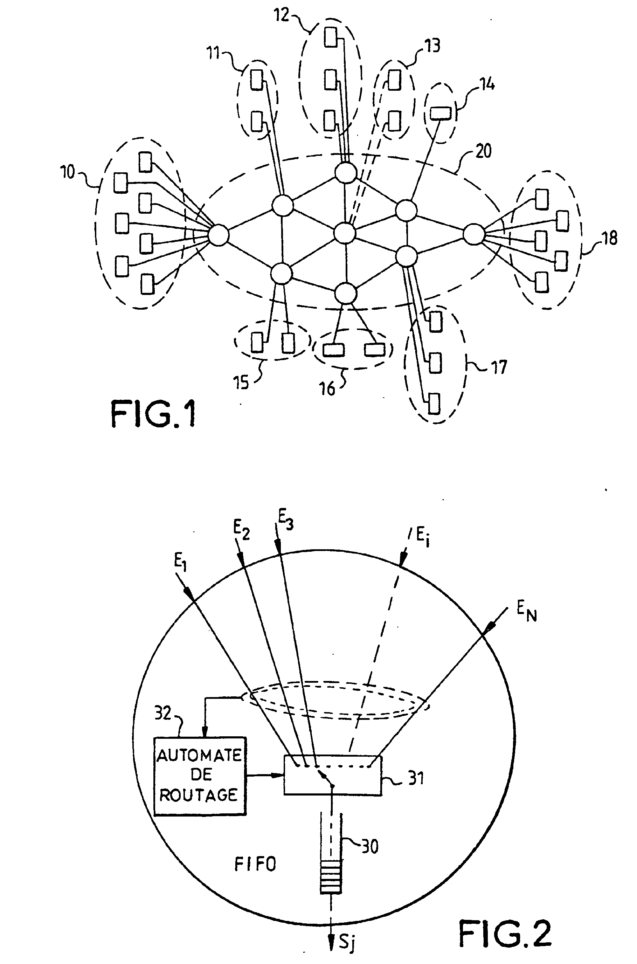

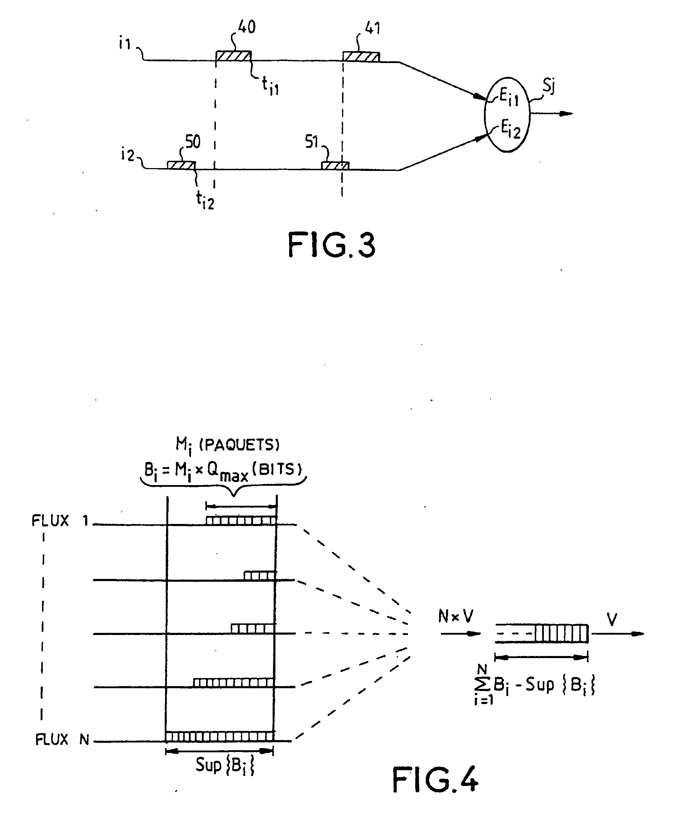

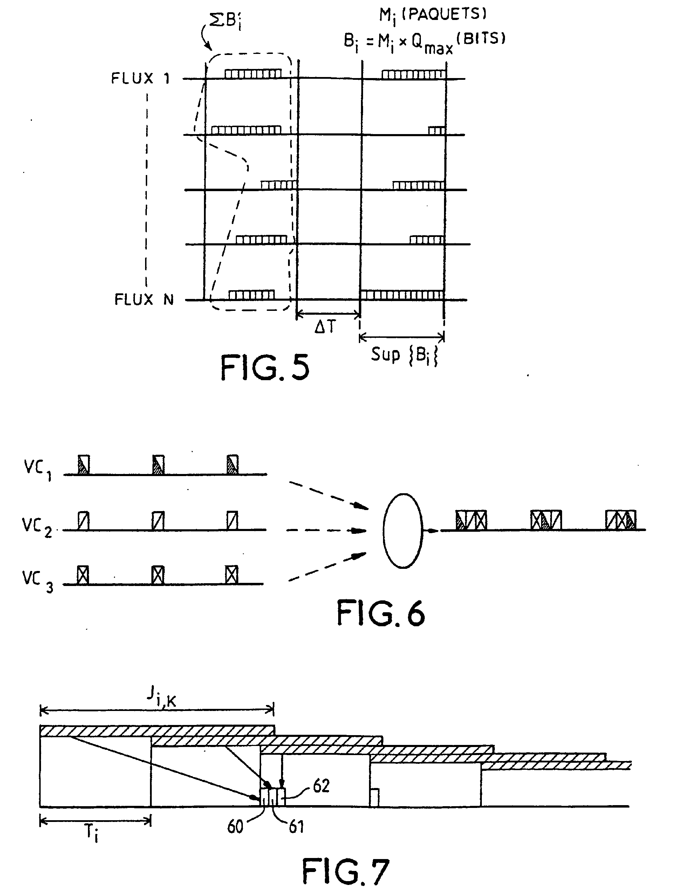

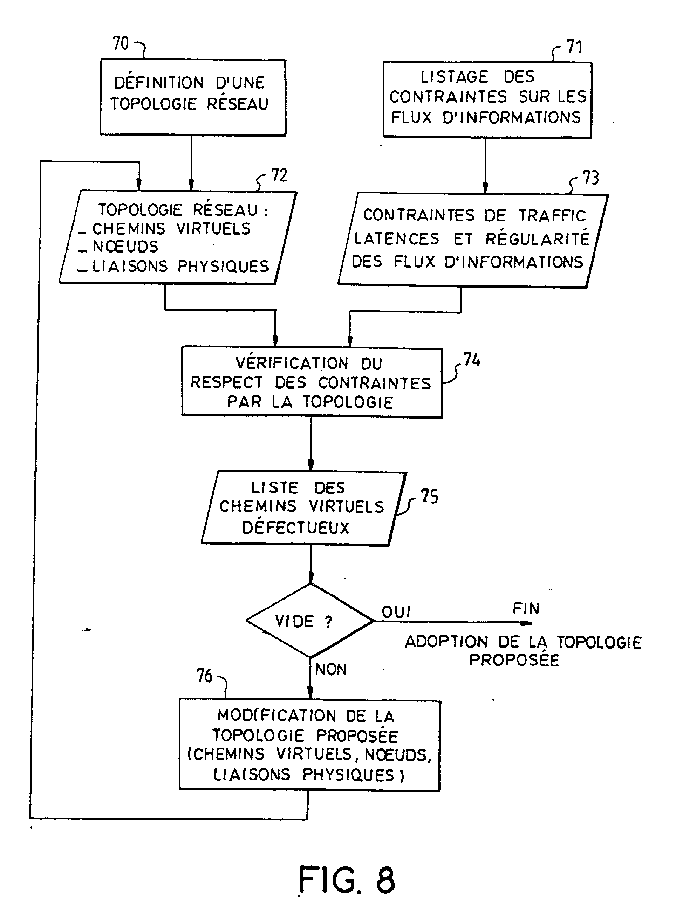

- une figure 1 représente un exemple de topologie de réseau de transmission à commutation par paquets,
- une figure 2 schématise un noeud d'interconnexion du réseau de transmission précédent, vu de l'un de ses ports de sortie,
- une figure 3 illustre le phénomène d'engorgement qui peut se produire à la confluence de deux flux réguliers de paquets et qui justifie la présence d'une file d'attente en amont d'un port de sortie d'un noeud d'interconnexion,
- une figure 4 illustre le même phénomène d'encombrement que la figure 3 mais généralisé à la confluence de N flux comportant des agrégats de paquets,
- une figure 5 illustre la nécessité d'un intervalle de temps minimum entre deux salves de paquets sur N flux confluant vers un même port de sortie pour éviter une possibilité de débordement de la file d'attente régulant ce port de sortie,
- une figure 6 montre l'origine du phénomène de gigue affectant un flux régulier de paquets lorsqu'il conflue avec deux autres flux réguliers de paquets,
- une figure 7 montre le phénomène d'agrégation de paquets qui peut se produire le long d'un chemin virtuel en raison de la gigue introduite lors du franchissement des noeuds d'interconnexion d'un réseau de transmission placés sur ce chemin virtuel, et
- une figure 8 est un organigramme illustrant les principales étapes d'un procédé de dimensionnement de réseau selon l'invention.

La figure 1 montre différents ensembles d'équipements 10 à 18 qui communiquent entre eux par l'intermédiaire d'un réseau de transmission à commutation par paquets 20. Les ensembles d'équipements 10 à 18 sont d'importances inégales et géographiquement dispersés sur une zone couverte par le réseau de transmission à commutation par paquets 20 qui est schématisé par un maillage de noeuds d'interconnexion représentés par des cercles et de liaisons physiques d'interconnexion représentés par des segments de droite joignant les noeuds d'interconnexion entre eux. Chaque équipement représenté par un rectangle est raccordé au réseau de transmission à commutation par paquets, au niveau d'un ou plusieurs noeuds d'interconnexion placés à proximité, par une ou plusieurs liaisons physiques d'interconnexion.

L'émission des paquets dans le réseau par l'émetteur se fait de façon périodique. Chaque paquet est inséré dans une fenêtre temporelle et deux paquets successifs occupent deux fenêtres successives. Chaque paquet respecte un certain formalisme ou protocole qui dépend du réseau de transmission. En règle générale, il est structuré en champs de bits dont certains sont réservés aux informations de service nécessaires à son acheminement telles que les identités de l'entité expéditrice et de l'entité destinataire, et d'autres aux données à transmettre. Au départ d'un équipement, les paquets occupent, sur la liaison physique d'interconnexion qui les mène à un premier noeud d'interconnexion du réseau, des fenêtres temporelles régulièrement espacées. Arrivés à ce premier noeud d'interconnexion, chaque paquet est soumis à un routage qui consiste en une analyse de ses champs d'informations de service pour déterminer par quel port de sortie le paquet doit quitter le noeud puis en un aiguillage du paquet vers la file d'attente du port de sortie concerné. La file d'attente est indispensable car un paquet peut se trouver en contention, c'est-à-dire en concurrence sur le port de sortie, avec d'autres paquets provenant d'autres ports d'entrée du noeud de connexion. La mémoire réalisée sous forme de FIFO permettra de stocker ces paquets dans l'attente de leur tour d'émission. Après un certain délai d'attente qui dépend de l'importance de la file d'attente au moment de son passage, le paquet est émis sur une liaison physique d'interconnexion qui le mène à l'équipement destinataire, soit directement, soit par l'intermédiaire d'autres noeuds d'interconnexion et d'autres liaisons physiques d'interconnexion.

La figure 2 modélise un noeud d'interconnexion vu d'un de ses ports de sortie $S_j$. On distingue, en amont du port de sortie $S_j$, une mémoire 30 de type FIFO (First In First Out en langage anglo-saxon) alimentée en paquets par un multiplexeur 31 connecté aux divers ports d'entrée $E_1$, $E_2$,..$E_i$.., $E_N$ susceptibles d'être aiguillées sur la sortie $S_j$. Le multiplexeur 31 est contrôlé par un automate de routage 32 qui capture les paquets parvenant aux ports d'entrée du noeud d'interconnexion, analyse leurs champs d'informations de service et détermine les ports de sortie par lesquels ils doivent quitter le noeud d'interconnexion.

La présence d'une file d'attente en amont de chaque port de sortie d'un noeud de connexion pose le problème de sa gestion, c'est-à-dire des contraintes à imposer aux trafics alimentant cette file d'attente pour qu'elle reste limitée et de l'estimation de sa taille maximale lorsque ces contraintes sont respectées. En effet, un débordement d'une file d'attente peut engendrer une perte de paquets tandis que la taille maximale d'une file d'attente détermine le retard maximum que peut subir un paquet lorsqu'il transite par le port de sortie associé à la file d'attente.

Pour apprécier les propriétés d'une file d'attente placée dans un noeud d'interconnexion en amont d'un port de sortie, on commence par se placer dans les conditions favorables d'un port de sortie d'un noeud d'interconnexion de premier niveau recevant deux flux réguliers de paquets parvenant sur deux ports d'entrée distincts, réguliers signifiant que ces deux flux de paquets n'ont traversé, au préalable, aucun autre noeud d'interconnexion où ils auraient pu passer par une file d'attente de sorte qu'ils ne sont pas encore affectés par un phénomène de gigue, leurs paquets se succédant à des cadences régulières.

Soient, comme représenté sur la figure 3, deux flux réguliers i1 et i2 de paquets arrivant avec une vitesse V et avec une périodicité $T_{i1}$ pour le flux i1 et $T_{i2}$ pour le flux i2 sur deux ports d'entrée $E_{i1}$ et $E_{i2}$ d'un noeud de connexion de premier niveau pour être dirigés sur le même port de sortie $S_j$, les paquets du flux i1 étant composés de $q_{i1}$ bits et ceux du flux i2 de $q_{i2}$ bits. Deux cas peuvent se produire au niveau de la sortie $S_j$ du noeud d'interconnexion :

- soit le paquet entrant du flux i1 et le paquet entrant du flux i2 occupent des fenêtres temporelles sans recouvrement, la taille de la fenêtre étant égale à ce niveau à la durée du paquet puisque celui-ci n'a subi aucune gigue. Ils sont alors dits non concurrents et sont aiguillés sans subir de retard vers le port commun de sortie. Les paquets 40 et 50 sont un exemple de paquets non concurrents.
- soit le paquet entrant du flux i1 et le paquet entrant du flux i2 occupent des fenêtres temporelles se recouvrant sur au moins un bit. Ils sont alors dits en contention. Le deuxième paquet dans le temps doit attendre la fin du traitement du premier paquet dans une file d'attente avant de pouvoir être dirigé sur le port de sortie. Les paquets 41 et 51 sont un exemple de paquets en contention.

Soient deux paquets non concurrents, l'un reçu en premier par le noeud d'interconnexion à la date de réception $t_{i1}$ et l'autre reçu en second à la date de réception $t_{i2}$, la propriété de non concurrence s'exprime par la condition :

$$t_{i2} \geq t_{i1} + \frac{q_{i1}}{V}$$

$q_{i1}$ étant la taille en bits d'un paquet du flux i1, en fait du paquet reçu le premier.
tandis que le phénomène de contention s'exprime par la condition

$$t_{i2} < t_{i1} + \frac{q_{i1}}{V}$$

Lorsque deux paquets sont en contention, le deuxième est retardé le temps nécessaire au traitement du premier et passe en sortie immédiatement à la suite du premier sans laisser de fenêtre temporelle libre entre eux. Le deuxième paquet forme alors, avec le premier, un agrégat de deux paquets. Le phénomène d'agrégation de paquets s'accroît de noeud d'interconnexion en noeud d'interconnexion sur le trajet d'un flux d'informations. Ainsi, lorsqu'un flux de paquets parvient en entrée d'un noeud d'interconnexion de niveau inférieur au premier niveau, il peut contenir des agrégats plus ou moins importants de plusieurs paquets provenant des routages subis par les paquets dans des noeuds d'interconnexion rencontrés en amont. Ces agrégats perturbent les débits des flux de paquets en leur ajoutant de la gigue et provoquent des accroissements brusques d'activité au niveau des noeuds d'interconnexion.

Pour apprécier ce phénomène, on se place dans l'hypothèse plus proche de la réalité, illustrée par la figure 4, d'un port de sortie d'un noeud d'interconnexion de niveau inférieur recevant une salve de N agrégats de paquets en contention, provenant de N flux distincts de paquets arrivant au noeud d'interconnexion à la même vitesse de transmission V, par N ports d'entrée distincts. Ces N agrégats de paquets doivent patienter dans une file d'attente en amont du port de sortie pour être émis, chacun à leur tour, sur la liaison physique d'interconnexion raccordée au port de sortie.

En supposant :

- que la taille maximale en nombre de bits, d'un paquet autorisé dans le réseau est $q_{max}$,
- que la taille maximale d'un agrégat en nombre de paquets, provenant du ième flux est $M_i$ de sorte que la taille maximale en bits $B_i$ d'un agrégat provenant d'un ième flux vaut :

$$B_i = M_i \times q_{max}$$

- que l'ensemble des flux arrive dans la file d'attente à la vitesse apparente NV, et
- que la file d'attente se vide à la vitesse V,

la quantité maximale Q de bits susceptibles de patienter dans la file d'attente est au plus :

$$Q = \sum_{i=1}^{N} B_i - Sup\{B_i\} \qquad (1)$$

$Sup\{B_i\}$ étant la taille en bits de l'agrégat le plus important parmi ceux des N flux d'entrée, c'est-à-dire la somme des bits de tous les agrégats moins les bits de l'agrégat le plus important qui peut être l'un quelconque d'entre eux. Si tous les agrégats ont la même taille B, la quantité maximale de bits susceptibles de patienter dans la file d'attente vaut

$$Q = (N-1)B$$

De la quantité maximale de bits susceptibles de patienter dans la file d'attente, on déduit le délai maximum que peut introduire dans la transmission des paquets, la traversée du noeud d'interconnexion considéré, délai maximum qui correspond à l'accroissement de gigue ∆J apporté par ce noeud d'interconnexion aux flux de paquets :

$$\Delta J = \frac{Q}{V} = \frac{\sum_{i=1}^{N} B_i - Sup\{B_i\}}{V} \qquad (2)$$

Pour que cette quantité maximale de bits susceptible de patienter dans une file d'attente ne soit pas dépassée, il faut que la file d'attente ait, entre deux salves, le temps de se vider suffisamment pour accueillir les bits de la salve à venir. Ce temps correspond à un délai minimum ∆T entre deux salves. Si l'on considère un seul flux, le délai minimum

$\Delta T_i$ qui doit séparer un premier agrégat $B_i$ d'un deuxième agrégat $B_i'$ doit respecter la condition :

$$\Delta T_i \geq \frac{B_i'}{V} \qquad (3)$$

Dans le cas plus général illustré à la figure 5 où une salve de N agrégats $B_i'$ arrivant simultanément sur N flux suit une salve de N agrégats $B_i$ déjà arrivés simultanément sur N flux, le délai minimum $\Delta T$ séparant les deux salves doit respecter la condition

$$\Delta T \geq \frac{\sum_{i=1}^{N} B_i'}{V}$$

Fort de ces considérations sur le franchissement d'un noeud d'interconnexion par des flux de paquets, on passe aux chemins virtuels, c'est-à-dire aux trajets effectivement suivis dans le réseau de transmission par les différents flux d'informations échangés entre les équipements raccordés au réseau de transmission. Dans le cas d'un réseau de transmission à commutation par paquets de type déterministe, ces chemins virtuels sont invariants, tous les paquets d'un même flux subissant le même routage au travers des noeuds d'interconnexion du réseau. Le délai maximum de réception par un équipement destinataire d'un message émis au travers du réseau de transmission par un équipement expéditeur peut alors être apprécié au travers du délai maximum de transmission des paquets sur le chemin virtuel les reliant au travers du réseau.

On part de l'hypothèse que le trafic d'un chemin virtuel VC est toujours régulé à sa source de façon qu'un temps minimum T sépare deux de ses paquets successifs. Comme le montre la figure 6, la traversée du premier noeud d'interconnexion par les paquets suivant un chemin virtuel $VC_i$ se manifeste par l'apparition d'une gigue due au phénomène de contention au niveau de ce noeud d'interconnexion avec des paquets suivant d'autres chemins virtuels empruntant le même port de sortie. Ce phénomène de contention fait qu'un paquet suivant un chemin virtuel VC peut se retrouver en sortie d'un noeud d'interconnexion au sein d'un agrégat de paquets suivant d'autres chemins virtuels et à une position quelconque au sein de cet agrégat. La possibilité d'agrégation à la traversé d'un noeud d'interconnexion de premier niveau fait passer la largeur de la fenêtre temporelle dans laquelle peut se trouver un paquet, de la largeur maximale d'un paquet au départ du chemin virtuel VC à la largeur du plus gros agrégat possible et introduit un phénomène de gigue puisque la largeur du paquet ne varie pas mais sa position est déplacée par rapport à sa fenêtre d'émission d'un retard imprévisible dont on ne connaît que la borne supérieure. Cette gigue correspond au retard maximum que peut subir le paquet à sa traversée du noeud d'interconnexion puisqu'il peut le traverser sans aucun retard si les conditions lui sont favorables ou avec le retard maximum si les conditions lui sont particulièrement défavorables. Dans l'exemple de la figure 6, la position de la fenêtre d'un paquet qui était certaine avant le noeud d'interconnexion de premier niveau et correspondait à la fenêtre d'émission, devient incertaine après le noeud d'interconnexion, l'incertitude couvrant la durée de trois paquets.

La gigue subie par les paquets suivant un chemin virtuel déterminé s'accroît au fil des franchissements des noeuds d'interconnexion. Plus précisément, la gigue $J_{l,K}$ affectant un flux de paquets suivant un chemin virtuel $VC_l$, au niveau de la sortie du Kième noeud d'interconnexion rencontré est égal à la somme des composantes de gigue apportées par tous les noeuds d'interconnexion franchis :

$$J_{l,K} = \sum_{p=1}^{K} \Delta J_{l,p} \qquad (4)$$

les composantes de gigue apportées par les différents noeuds de connexion traversés étant déterminées à partir de la relation (2).

Lorsque la gigue affectant les paquets d'un même flux d'informations, c'est-à-dire les paquets suivant un même chemin virtuel $VC_i$ approche ou dépasse la période minimum $T_i$ séparant à l'émission deux paquets successifs, il peut se produire un phénomène d'agrégation au niveau du chemin virtuel lui-même. En effet, si l'ordre des paquets suivant un chemin virtuel ne peut être modifié puisque les paquets suivent l'un derrière l'autre un même et unique trajet au sein du réseau de transmission qui est de type déterministe, les paquets franchissent un même noeud d'interconnexion à des instants différents, avec des temps de transit variables dépendant de l'occupation, au moment de leur passage, de la file d'attente du port de sortie qu'ils empruntent. Ainsi, après un paquet ayant mis beaucoup de temps pour franchir un noeud d'interconnexion, le paquet suivant du même chemin virtuel peut mettre moins de temps et ainsi de suite avec pour résultat un agrégat de paquets sur le chemin virtuel si la gigue affectant en sortie, le chemin virtuel devient du même ordre ou supérieure à la période minimum séparant, à l'émission, deux paquets successifs. La figure 7 illustre un cas d'agrégation de paquets pouvant se produire dans un chemin virtuel présentant en sortie une gigue légèrement supérieure au double de l'intervalle de temps $T_i$ séparant deux paquets successifs au moment de leur introduction dans le chemin virtuel. Un premier paquet 60 subit un temps de traitement particulièrement long pratiquement égal à la gigue, car il franchit les noeuds d'interconnexion empruntés par le chemin virtuel en des instants où les files d'attente sont particulièrement chargées, et se retrouve avec un retard pratiquement égal au double de l'intervalle de temps $T_i$ le séparant à l'émission des autres paquets. Le paquet qui le suit le rattrape car il rencontre des conditions d'acheminement plus favorables mais il ne peut le dépasser de sorte qu'il subit encore un retard de l'ordre d'un intervalle de temps $T_i$ tandis que le paquet suivant 62 rencontre encore des conditions d'acheminement favorables et n'est pratiquement plus bloqué par les paquets qui le précèdent sur le chemin virtuel. Le résultat est qu'à l'arrivée du chemin virtuel, il y a des intervalles de temps $T_i$ vides alors qu'ils devraient contenir un paquet et d'autres contenant des agrégats de paquets alors qu'ils ne devraient contenir qu'un seul paquet à la fois.

Plus précisément, la taille maximale d'un agrégat $B_{VC_{l,i,k}}$ susceptible de se présenter sur un chemin virtuel $VC_l$ empruntant le port d'entrée $E_i$ d'un Kième noeud de connexion K traversé par le chemin virtuel $VC_l$ est liée à la somme des composantes de gigue $\Delta J_{l,k}$ accumulées sur ce chemin virtuel $VC_l$ aux passage des noeuds d'interconnexion rencontrés avant ce Kième noeud d'interconnexion et à l'intervalle de temps minimum $T_l$ de séparation des paquets à leur introduction dans le chemin virtuel par le système de relations :

$$\begin{cases} B_{VC_{l,i,k}} = 1 + \text{partie entière}\left(\dfrac{\sum\limits_{k=1}^{K-1}\Delta J_{l,k}}{T_l}\right) \times q_{\max} & pour \quad \sum\limits_{k=1}^{K-1}\Delta J_{l,k} \geq T_l \quad et \quad \sum\limits_{k=1}^{K-1}\Delta J_{l,k} < T_l - \dfrac{q_{\max}}{V} \\[4em] B_{VC_{l,i,k}} = 2 & pour \quad T_l - \dfrac{q_{\max}}{V} \leq \sum\limits_{k=1}^{K-1}\Delta J_{l,k} < T_l \end{cases}$$

$$(5)$$

et l'intervalle de temps minimum séparant un tel agrégat du prochain paquet sur le chemin virtuel $VC_l$ toujours au niveau du port d'entrée $E_i$ du Kième noeud d'interconnexion traversé a pour valeur :

$$\Delta T_l = T_l - Reste\left(\dfrac{\sum\limits_{k=1}^{K-1}\Delta J_{l,k}}{T_l}\right) - \dfrac{B_{VC_{l,k,j}}}{V} \qquad (6)$$

ceci à l'entrée du noeud k, sachant qu'un agrégat ne peut se produire que lorsque le prochain paquet n'a pas été retardé dans les files d'attente qu'il a traversé. Ce paquet est dit conforme si la distance le séparant de l'agrégat est $\geq \Delta T_l$.

La taille maximale Q d'une file d'attente en amont d'un port de sortie $S_j$ d'un noeud d'interconnexion k, en présence d'une salve unique de paquets ou agrégats de paquets obtenue précédemment (relation (1)) peut également être exprimée en fonction des flux empruntant les N chemins virtuels $VC_l$ passant par le port de sortie $S_j$ considéré :

$$Q = \sum_{l=1}^{N}\text{Taille agrégat max}_{VC_l} - Sup\left\{\text{Taille agrégat max}_{VC_l}\right\}_{1 \leq l \leq N}$$

La condition d'équilibre (relation (3)) garantissant le non-dépassement de cette taille maximale en présence du seul trafic d'un chemin virtuel $VC_l$, impose un intervalle de temps minimum $\Delta T_l$ entre deux salves :

$$\Delta T_l \geq \frac{B_l^{'}}{V}$$

Or celui-ci vérifie en raison de la relation (6), la condition :

$$\Delta T_1 \geq T_l - Reste\left(\frac{\sum_{k=1}^{K-1}\Delta J_{l,k}}{T_l}\right) - \frac{B_{VC_{l,k,j}}}{V}$$

De sorte que la condition d'équilibre en présence d'un seul chemin virtuel devient :

$$\frac{B_1^{'}}{V} \leq T_l - Reste\left(\frac{\sum_{k=1}^{K-1}\Delta J_{l,k}}{T_l}\right) - \frac{B_{VC_{l,k,j}}}{V}$$

Comme, par ailleurs, on a vu qu'un intervalle de temps minimum $\Delta T_l$ entre deux paquets ou agrégats d'un chemin virtuel $VC_l$ ne pouvait se produire qu'entre un agrégat suivi d'un paquet isolé, on a :

$$B_l^{'} = q_{max}$$

En final, la condition d'équilibre en présence d'un seul chemin virtuel s'écrit :

$$\frac{q_{max}}{V} \leq T_l - Reste\left(\frac{\sum_{k=1}^{K-1}\Delta J_{l,k}}{T_l}\right) - \frac{B_{VC_{l,k,j}}}{V} \tag{7}$$

En présence de plusieurs chemins virtuels, l'intervalle de temps minimum à respecter pour éviter tout dépassement de la taille maximale $Q_{max}$ d'une file d'attente doit tenir compte des interactions des trafics de tous les chemins virtuels passant par la file d'attente. Dans le cas le plus défavorable, où la contention est maximale, tous les chemins virtuels présentant en même temps des agrégats de paquets de taille maximale, la deuxième salve sera composée de paquets isolés ne se présentant pas tous en même temps. On fait donc l'hypothèse qu'à la fin de la première salve, la file d'attente atteint sa capacité maximale et qu'elle reçoit au cours de la deuxième salve N paquets isolés ou conformes dont seulement M sont contraints, c'est-à-dire se recouvrant d'au moins un bit. Dans ces conditions, on peut garantir que la file d'attente ne dépassera pas sa capacité maximale si le premier paquet de la deuxième salve arrive au bout d'un temps $\Delta T$ après la première salve, suffisant pour que la file d'attente ait pu se vider de M-1 paquets. Cela revient à admettre la condition :

$$\Delta T' \geq (M-1)\frac{q_{\max}}{V} \qquad\qquad (8)$$

qui s'exprime encore à partir de la date $t_e$ de réception de la fin de la première salve et de la date de réception $t_s$ du début de réception de la deuxième salve dans la file d'attente :

$$\Delta T = t_s - t_e \geq (M-1)\frac{q_{\max}}{V}$$

Or l'on a, si l'on prend comme référence de temps l'instant du début de réception de la première salve dans la file d'attente :

$$t_e = \frac{\underset{1 \leq l \leq N}{Sup\{\text{Taille agrégat max}_{VC_l}\}}}{V}$$

et

$$t_s = \min_{1 \leq j \leq M}\{t_j\}$$

($t_j$ étant l'instant d'arrivée dans la file d'attente du $j$ ième paquet en contention de la deuxième salve par référence avec l'instant d'arrivée de la première salve dans la file d'attente) de sorte que la condition d'équilibre s'écrit aussi :

$$\min_{1 \leq j \leq M}\{t_j\} - \frac{\underset{1 \leq l \leq N}{Sup\{\text{Taille agrégat max}_{VC_l}\}}}{V} \geq (M-1)\frac{q_{\max}}{V}$$

Cette condition d'équilibre, se traduit, pour l'un quelconque k des chemins virtuels empruntant la file d'attente, par la condition suivante sur son intervalle de temps minimum $\Delta T_k$:

$$\Delta T_k \geq (M-1)\frac{q_{\max}}{V} + \frac{\underset{1 \leq l \leq N}{Sup\{\text{Taille agrégat max}_{VC_l}\}}}{V} - \frac{\text{Taille agrégat max}_{VC_k}}{V} \qquad\qquad (9)$$

Les relations qui viennent d'être établies permettent de dimensionner un réseau de transmission à commutation par paquets de type déterministe pour qu'il satisfasse à des contraintes particulières de latence ou délai d'acheminement, et de régularité d'acheminement ou gigue imposées aux flux d'informations qui parcourent ses chemins virtuels.

Le dimensionnement d'un réseau de transmission à commutation par paquets de type déterministe se fait par affinages successifs. On commence par proposer une topologie initiale de réseau, c'est-à-dire un ensemble de chemins virtuels figés interconnectant les équipements à mettre en relation, et un maillage de noeuds d'interconnexion et de liaisons physiques de raccordement entre noeuds d'interconnexion et entre noeuds d'interconnexion et équipements qui supporte les chemins virtuels, paraissant pouvoir s'accommoder de la disposition géographique des équipements à relier, et avoir des performances suffisantes pour les quantités d'informations à échanger entre les équipements. On vérifie alors que la topologie proposée supporte les différents trafics prévus aussi bien au niveau des liaisons physiques de raccordement, dont les débits doivent être suffisants pour assurer l'écoulement des trafics locaux qui les empruntent, qu'au niveau des noeuds d'interconnexion dont les occupations des files d'attente doivent permettre de respecter les contraintes imposées par les équipements, sur les délais et les régularités d'acheminement des flux d'informations. Tant que cette vérification n'est pas concluante, on retouche la topologie proposée aussi bien au niveau des chemins virtuels (nombre et configuration), qu'au niveau des noeuds d'interconnexion (nombre et capacité en ports d'entrée et de sortie) et des liaisons physiques de raccordement (nombre et débits), en recherchant une certaine homogénéité entre les différents noeuds d'interconnexion et les différentes liaisons physiques de raccordement.

La principale difficulté réside dans l'étape de vérification de la bonne adaptation de la topologie proposée aux diverses contraintes imposées. Pour mener à bien cette vérification, on propose de déterminer, de façon incrémentale, en descendant les cours des chemins virtuels, les composantes de gigue ajoutées par les différents noeuds d'interconnexion au niveau de leurs différents ports de sortie en éludant tout d'abord, le problème de possibilité d'engorgement de file d'attente posé par des salves successives de paquets trop rapprochées, puis en vérifiant sur chaque chemin virtuel qu'un tel problème ne se pose pas. La connaissance des composantes de gigue ajoutées par les différents noeuds d'interconnexion sur leurs ports de sortie permet de déterminer facilement la gigue totale affectant chaque chemin virtuel du réseau de transmission pour voir si elle est suffisamment faible pour permettre de respecter les contraintes sur les délais et la régularité de la transmission imposées par les équipements mis en communication.

En effet, la composante de gigue au niveau de l'un $S_j$ des ports de sortie d'un noeud d'interconnexion K peut être déterminée au moyen de la relation (2), à partir de la quantité maximale Q de bits pouvant se trouver dans la file d'attente de ce port de sortie et de la vitesse de transmission V de la liaison physique de raccordement partant de ce port de sortie :

$$\Delta J_{K,i} = \frac{Q}{V} = \frac{\sum_{i=1}^{N} B_i - Sup\{B_i\}}{V}$$

La vitesse de transmission V de la liaison physique de raccordement partant du port de sortie est une donnée découlant des caractéristiques de cette liaison physique. La quantité maximale Q de bits de la file d'attente peut être déterminée, au moyen de la relation (1), en fonction des tailles maximales en bits $B_i$, des agrégats de paquets convergeant vers le port de sortie considéré $S_j$:

$$Q = \sum_{i=1}^{N} B_i - Sup\{B_i\}$$

N étant le nombre de flux de paquets susceptibles de converger vers le port de sortie considéré, c'est-à-dire le nombre de chemins virtuels arrivant sur le noeud d'interconnexion et convergeant vers le port de sortie $S_j$ considéré,

La taille maximale en bits Bi d'un agrégat de paquets peut également s'exprimer par la relation :

$$B_i = M_i \times q_{max}$$

$M_i$ étant le nombre maximum de paquets dans un agrégat de paquets et $q_{max}$ étant le nombre maximum de bits d'un paquet. C'est une donnée à ce niveau d'incrémentation puisqu'elle concerne les ports d'entrée du noeud d'interconnexion et donc, soit des ports de sortie de noeuds d'interconnexion situés en amont sur les chemins virtuels qui ont fait l'objet d'étapes précédentes dans l'incrémentation, soit des ports de sortie des équipements.

Plus précisément, la taille maximale $B_i$ en bits d'un agrégat de paquets susceptible de se présenter sur un chemin virtuel $VC_i$ dans un noeud d'interconnexion K du réseau est prise égale à la taille du plus gros agrégat de paquets $B_{VCl,i,k}$ susceptible de se présenter au niveau du noeud d'interconnexion K pour converger vers son port de sortie $S_j$. sur le chemin virtuels $VC_i$ empruntant un port d'entrée du noeud de connexion K considéré :

$$B_i = Sup\{B_{VC_{i,i,k}}\}$$

la taille du plus gros agrégat de paquets $B_{VC_{l,i,k}}$ susceptible de se présenter sur un chemin virtuel $VC_i$ empruntant un port d'entrée du noeud de connexion K considéré étant obtenue à partir du système de relations (5) :

$$\begin{cases} B_{VC_{l,i,k}} = 1 + \text{partie entière}\left(\dfrac{\sum\limits_{k=1}^{K-1}\Delta J_{l,k}}{T_l}\right)\times q_{max} & pour \quad \sum\limits_{k=1}^{K-1}\Delta J_{l,k} \geq T_l \quad et \quad \sum\limits_{k=1}^{K-1}\Delta J_{l,k} < T_l - \dfrac{q_{max}}{V} \\[6mm] B_{VC_{l,i,k}} = 2 & pour \quad T_l - \dfrac{q_{max}}{V} \leq \sum\limits_{k=1}^{K-1}\Delta J_{l,k} < T_l \end{cases}$$

K étant ici, le nombre de noeuds d'interconnexion traversés par un chemin virtuel considéré avant d'arriver au niveau du port de sortie considéré du noeud d'interconnexion étudié et l'indice k repérant les noeuds de connexion traversés en amont, par un chemin virtuel considéré dans l'ordre où ils sont traversés par les paquets.

On remarque que le système de relations précédent ne fait appel qu'à des composantes de gigue $\Delta J_{l,k}$ concernant des ports de sortie de noeuds d'interconnexion placés en amont sur les chemins virtuels concernés et donc déterminées au cours de précédentes étapes de l'incrémentation.

Une fois déterminées les composantes de gigue ajoutées par les différents noeuds d'interconnexion aux niveaux de leurs différents ports de sortie, on vérifie, sur chaque chemin virtuel $VC_l$, que les intervalles de temps minimum $\Delta T_{l,K}$ entre le plus gros agrégat et le prochain paquet arrivant au plus tôt aux niveaux des divers noeuds d'interconnexion rencontrés, obtenus par la relation (6) :

$$\Delta T_{l,K} = T_l - Reste\left(\frac{\sum\limits_{k=1}^{K}\Delta J_{l,k}}{T_l}\right) - \frac{B_{VC_{l,k,j}}}{V}$$

sont suffisants pour éviter tout problème d'engorgement des files d'attente causé par des salves trop rapprochées, c'est-à-dire qu'ils satisfont soit l'inégalité (8) :

$$\Delta T \geq (M-1)\frac{q_{max}}{V}$$

M étant un entier positif au plus égal au nombre de chemins virtuels empruntant le port de sortie de noeud d'interconnexion considéré, choisi en fonction du degré de sûreté exigé pour la transmission, soit l'inégalité (9) :

$$\Delta T_k \geq (M-1)\frac{q_{max}}{V} + \frac{\underset{1 \leq l \leq N}{Sup}\{\text{Taille agrégat max}_{VC_l}\}}{V} - \frac{\text{Taille agrégat max}_{VC_k}}{V}$$

Une fois ces conditions satisfaites, on admet les estimations des différentes composantes de gigue et on les utilise pour déterminer la gigue affectant chaque chemin virtuel et vérifier qu'elle est compatible avec les contraintes de latence et de régularité imposées aux différents flux d'informations échangés entre les équipements. Les conditions et contraintes non respectées remettent en question la topologie proposée qui est modifiée jusqu'à temps qu'elles soient satisfaites.

La figure 8 est un organigramme illustrant les principales étapes du procédé de dimensionnement d'un réseau de transmission à commutation par paquets mettant en oeuvre la méthode de vérification de conformité précédente.

Cet organigramme débute par deux tâches séparées, l'une 70 de proposition d'une topologie de réseau de transmission à commutation par paquets de type déterministe prenant en compte les localisations géographiques des équipements à raccorder et l'importance des flux d'informations à échanger entre eux, l'autre 71 d'inventaire répertoriant les contraintes de latence et de régularité de trafic qui doivent être respectées par les flux d'informations échangés par les équipements au travers du réseau. La tâche 70 de proposition d'une topologie de réseau fait une proposition, sous forme du tableau de données 72, d'un plan de réseau déterministe avec des chemins virtuels figés, au moins un par flux d'informations et un maillage de noeuds d'interconnexion reliés entre eux et aux équipements par des liaisons physiques de raccordement sur lequel sont tracés de manière figée les différents chemins virtuels. La tâche d'inventaire 71 répertorie, sous forme d'un tableau de données 73, les contraintes de latence et de trafic à respecter par les différents flux d'informations, donc par les différents chemins virtuels acheminant ces flux. Les deux tableaux de données 72 et 73 relatifs à la topologie proposée pour le réseau et aux contraintes de transmission associées aux différents flux d'informations à transmettre sont alors utilisés par une tâche 74 de vérification de l'adéquation de la topologie proposée aux différentes contraintes qui détermine, de façon incrémentale, selon la méthode qui vient d'être décrite, les composantes de gigue apportées par les noeuds d'interconnexion au niveau de leurs différents ports de sortie, déduit de ses composantes de gigue les gigues affectant les différents chemins virtuels proposés, vérifie que les intervalles de temps minimum $\Delta T_{I,K}$ séparant deux paquets ou agrégats de paquets sur chaque chemin virtuel et aux niveaux des divers noeuds d'interconnexion rencontrés sont suffisants pour que les déterminations d'amplitudes de gigue ne puissent pas être remises en cause, et engendre, sous forme d'un tableau de données 75, une liste des chemins virtuels posant problème, soit parce qu'ils ne respectent pas les intervalles de temps minima entre paquets ou agrégats de paquets successifs, soit parce qu'ils sont affectés d'une gigue trop importante pour respecter les temps de latence ou les contraintes de régularité imposés aux flux d'informations qu'ils acheminent, avec une liste des ports de sortie de noeuds d'interconnexion où ces problèmes ont été détectés pour la première fois le long du cours de chaque chemins virtuels. Ce tableau 75 avec sa liste de chemins virtuels posant problème et des ports de sortie des noeuds d'interconnexion où apparaissent les problèmes détectés sur les chemins virtuels est alors utilisé par une tâche 76 de modification de la topologie du réseau qui propose un nouveau routage des chemins virtuels à problèmes, sans modifier le maillage des noeuds d'interconnexion et des liaisons physiques de raccordements lorsqu'il est possible de régler ces problèmes par une redistribution des ressources du réseau entre les différents chemins virtuels, ou en modifiant le maillage du réseau par ajout de nouvelles liaisons physiques de raccordement entre les noeuds d'interconnexion, augmentation du nombre de ports d'entrée ou de sortie de certains noeuds d'interconnexion et même par ajout de nouveaux noeuds d'interconnexion. Cette tâche 66 délivre une nouvelle proposition de topologie pour le réseau qui prend la place de la précédente dans le tableau de données 72 qui est à son tour soumise à la tâche de vérification 74, cela jusqu'à ce que la table de données 75 répertoriant les chemins virtuels à problèmes soit vide.

## Revendications

1. Procédé de dimensionnement d'un réseau de transmission à commutation par paquets de type déterministe (20) desservant des équipements (10 à 18) à mettre en relation et comportant des noeuds d'interconnexion reliés entre eux et aux équipements par des liaisons de liaisons physiques de raccordement, ce procédé consistant à établir une liste des flux d'informations à acheminer entre les différents équipements (10 à 18) à raccorder par le réseau (20), proposer une topologie de réseau (72) adaptée à la disposition géographique des équipements (10 à 18) à relier par le réseau (20) et aux importances des flux d'informations à échanger entre les équipements (10 à 18), la dite topologie de réseau (72) consistant dans la définition de chemins virtuels VC pour l'acheminement des différents flux d'informations, et d'un maillage de noeuds d'interconnexion reliés entre eux et aux équipements (10 à 18) par des liaisons physiques de raccordement qui supportent ces chemins virtuels, estimer, au niveau de chaque noeud d'interconnexion, les retards maximum introduits sur les transmissions des paquets par les phénomènes de gigue provoqués par eux-mêmes et les noeuds d'interconnexion déjà franchis par les paquets, vérifier que ces retards maximum sont compatibles avec des limites imposées et retoucher la topologie (72) proposée pour le réseau (20) tant que cette compatibilité n'est pas obtenue,

   ce procédé étant **caractérisé en ce que**, dans un réseau (20) où les paquets ont tous la même vitesse d'acheminement V sur les liaisons physiques de raccordement reliant les noeuds d'interconnexion entre eux et aux équipements, l'estimation des temps de retard maximum introduits par le phénomène de gigue passe par la détermination de la composante de gigue $\Delta J_{k,j}$ ajoutée par un noeud d'interconnexion k au niveau de l'un de ses ports de sortie $S_j$ en relation, par l'intermédiaire d'une mémoire tampon (30) accueillant une file d'attente et d'un dispositif de multiplexage (31), avec N de ses ports d'entrée $E_i$, cette détermination de la composante de gigue $\Delta J_{k,j}$ s'effectuant, dans le cas où chaque flux de paquets d'un chemin virtuel VC entrant dans la mémoire tampon par un port d'entrée $E_j$ présente, entre un agrégat de paquets et le paquet ou l'agrégat de paquets qui le suit, un intervalle de temps minimum suffisant pour permettre un vidage de la mémoire tampon suffisant pour éviter son débordement à la réception du paquet ou agrégat de paquets suivant, par mise en oeuvre de la relation :

$$\Delta J_{k,i} = \frac{Q}{V} = \frac{\sum_{i=1}^{N} B_l - Sup\{B_l\}}{V}$$

Q étant la quantité maximale de bit de la file d'attente estimée à partir de la relation :

$$Q = \sum_{i=1}^{N} B_l - Sup\{B_l\}$$

N étant le nombre de flux de paquets susceptibles de converger vers le port de sortie considéré, c'est-à-dire le nombre de chemin virtuel traversant le noeud d'interconnexion et convergeant vers le port de sortie $S_j$ considéré, $B_l$ la taille maximale en bits d'un agrégat de paquets susceptible d'arriver sur un chemin virtuel $VC_i$ par un port d'entrée $E_i$, taille maximale que l'on peut également exprimer par la relation :

$$B_l = M_l \times q_{max}$$

$M_l$ étant le nombre maximum de paquets dans un agrégat de paquets susceptible d'arriver sur un chemin virtuel $VC_i$ par un port d'entrée $E_i$ et $q_{max}$ étant le nombre maximum de bits d'un paquet.

2.  Procédé selon la revendication 1, **caractérisé en ce que** la taille maximale $B_i$ en bits d'un agrégat de paquets susceptible de se présenter sur un chemin virtuel $VC_l$ au niveau d'un port d'entrée $E_i$ d'un noeud d'interconnexion du réseau est prise égale à la taille du plus gros agrégat de paquets $B_{VCl,i,k}$ susceptible de se présenter sur les chemins virtuels $VC_l$ empruntant le port d'entrée $E_i$ du noeud de connexion k considéré :

$$B_l = Sup\{B_{VC_{l,i,k}}\}$$

la taille du plus gros agrégat de paquets $B_{VCl,i,t}$ susceptible de se présenter sur un chemin virtuel $VC_l$ empruntant le port d'entrée $E_i$ du noeud de connexion k considéré étant obtenue à partir du système de relation :

$$\begin{cases} B_{VC_{l,i,k}} = 1 + \text{partie entière}\left(\frac{\sum_{k=1}^{K-1} \Delta J_{l,k}}{T_l}\right) \times q_{max} & pour \quad \sum_{k=1}^{K-1} \Delta J_{l,k} \geq T_l \quad et \quad \sum_{k=1}^{K-1} \Delta J_{l,k} < T_l - \frac{q_{max}}{V} \\ \\ B_{VC_{l,i,k}} = 2 & pour \quad T_l - \frac{q_{max}}{V} \leq \sum_{k=1}^{K-1} \Delta J_{l,k} < T_l \end{cases}$$

K étant le nombre de noeuds de connexion traversés par un chemin virtuel considéré et l'indice k repérant les noeuds de connexion traversés par un chemin virtuel considéré dans l'ordre où ils sont traversés par les paquets, les différentes composantes de gigue $\Delta J_{l,k}$ se déterminant de proche en proche en parcourant les différents chemins virtuels de leurs origines à leurs extrémités.

3.  Procédé selon la revendication 2, **caractérisé en ce que**, une fois déterminées les composantes de gigue ajoutées par les différents noeuds d'interconnexion aux niveaux de leurs différents ports de sortie, on vérifie, sur chaque chemin virtuel $VC_l$, que les intervalles de temps minimum $\Delta T_{l,K}$ entre le plus gros agrégat de paquets et le prochain paquet aux niveaux des divers noeuds d'interconnexion rencontrés, obtenus par la relation :

$$\Delta T_{l,K} = T_l - Reste\left(\frac{\sum_{k=1}^{K}\Delta J_{l,k}}{T_l}\right) - \frac{B_{VC_{l,k,j}}}{V}$$

sont suffisants pour éviter tout problème d'engorgement des files d'attente causé par des salves trop rapprochées, en recherchant s'ils satisfont à l'inégalité :

$$\Delta T \geq (M-1)\frac{q_{max}}{V}$$

M étant un entier positif au plus égal au nombre de chemins virtuels empruntant le port de sortie de noeud d'interconnexion considéré, choisi en fonction du degré de sûreté exigé pour la transmission,

4. Procédé selon la revendication 2, **caractérisé en ce que**, une fois déterminées les composantes de gigue ajoutées par les différents noeuds d'interconnexion aux niveaux de leurs différents ports de sortie, on vérifie, sur chaque chemin virtuel $VC_l$, que les intervalles de temps minimum $\Delta T_{l,K}$ entre son plus gros agrégat de paquets et le prochain paquet arrivant au plus tôt, aux niveaux des divers noeuds d'interconnexion rencontrés, obtenus par la relation :

$$\Delta T_{l,K} = T_l - Reste\left(\frac{\sum_{k=1}^{K}\Delta J_{l,k}}{T_l}\right) - \frac{B_{VC_{l,k,j}}}{V}$$

sont suffisants pour éviter tout problème d'engorgement des files d'attente causé par des salves trop rapprochées, en recherchant s'ils satisfont à l'inégalité :

$$\Delta T_k \geq (M-1)\frac{q_{max}}{V} + \frac{Sup_{1\leq l\leq N}\{\text{Taille agrégat max}_{VC_l}\}}{V} - \frac{\text{Taille agrégat max}_{VC_k}}{V}$$

pour un $VC_k$.

M étant un entier positif au plus égal au nombre de chemins virtuels empruntant le port de sortie de noeud d'interconnexion considéré, choisi en fonction du degré de sûreté exigé pour la transmission,

**Claims**

1. Method for dimensioning a transmission network with deterministic type packet switching (20) serving elements (10 to 18) to be interconnected and comprising interconnecting nodes, linked to each other and to the elements by physical connecting links, this method consisting in drawing up a list of information streams to be routed between the various elements (10 to 18) to be connected by the network (20), proposing a network topology (72), suited to the geographic disposition of the elements (10 to 18) to be linked by the network (20) and to the volumes of the information streams to be exchanged between the elements (10 to 18), said network topology (72) consisting in the definition of virtual channels VC for routing the various information streams, and a meshing of interconnecting nodes linked to each other and to the elements (10 to 18) by physical connecting links supporting these virtual channels, estimating, at each interconnecting node, the maximum delays introduced on the transmissions of the packets by the jitter phenomena provoked by themselves and the interconnecting nodes already crossed by the packets, checking that these maximum delays are consistent with imposed limits and adjusting the topology (72) proposed for the network (20) as long as this consistency is not obtained, this method being **characterized in that**, in a network (20) where the packets all have the same routing speed V over the physical connecting links linking the interconnecting nodes to each other and to the elements, the estimation of the maximum delay times introduced by the jitter phenomenon entails determining the jitter component $\Delta J_{k,j}$ added by an interconnecting node k at one of its output ports $S_j$ connected, via a buffer memory (30) accommodating a queue and a multiplexing device (31), with N of its input ports $E_i$, this determination of the jitter component $\Delta J_{k,j}$ being carried out, in the case where each stream of packets of a virtual channel VC incoming to the buffer memory via an input port $E_i$ has, between an aggregate of packets and the packet or the aggregate of packets that follows it, a minimum time interval that is sufficient to allow the buffer memory to be emptied sufficiently to avoid it overflowing on receipt of the next packet or aggregate of packets, by applying the relation:

$$\Delta J_{k,i} = \frac{Q}{V} = \frac{\sum_{i=1}^{N} B_i - Sup\{B_i\}}{V}$$

Q being the maximum quantity of bits in the queue estimated from the relation:

$$Q = \sum_{i=1}^{N} B_i - Sup\{B_i\}$$

N being the number of streams of packets likely to converge towards the output port concerned, namely the number of virtual channels passing through the interconnecting node and converging towards the output port $S_j$ concerned, $B_i$ being the maximum size in bits of an aggregate of packets likely to arrive over a virtual channel $VC_i$ via an input port $E_i$, a maximum size that can also be expressed by the relation:

$$B_i = M_i \times q_{max}$$

$M_i$ being the maximum number of packets in an aggregate of packets likely to arrive over a virtual channel $VC_i$ via an input port $E_i$ and $q_{max}$ being the maximum number of bits of a packet.

2. Method according to Claim 1, **characterized in that** the maximum size $B_i$ in bits of an aggregate of packets likely to arrive over a virtual channel $VC_i$ at an input port $E_i$ of an interconnecting node of the network is taken to be equal to the size of the largest aggregate of packets $B_{VC_{i,j,k}}$ likely to arrive over the virtual channels $VC_i$ using the input port $E_i$ of the connecting node k concerned:

$$B_i = Sup\{B_{VC_{i,j,k}}\}$$

the size of the largest aggregate of packets $B_{VC_{i,j,k}}$ likely to arrive over a virtual channel $VC_i$ using the input port $E_i$

of the connecting node k concerned being obtained from the relation system:

$$\begin{cases} B_{VC_{i,l,k}} = 1 + \text{ integer part}\left( \dfrac{\sum\limits_{k=1}^{K-1}\Delta J_{l,k}}{T_l}\right)\times q_{max} & \text{for} \quad \sum\limits_{k=1}^{K-1}\Delta J_{l,k} \geq T_l \quad et \quad \sum\limits_{k=1}^{K-1}\Delta J_{l,k} < T_l - \dfrac{q_{max}}{V} \\[4em] B_{VC_{i,l,k}} = 2 & \text{for} \quad T_l - \dfrac{q_{max}}{V} \leq \sum\limits_{k=1}^{K-1}\Delta J_{l,k} < T_l \end{cases}$$

K being the number of connecting nodes crossed by a virtual channel concerned and the index k identifying the connecting nodes crossed by a virtual channel concerned in the order in which they are crossed by the packets, the different jitter components $\Delta J_{i,k}$ being determined step by step by following the various virtual channels from their origins to their ends.

3. Method according to Claim 2, **characterized in that**, once the jitter components added by the various interconnecting nodes at their various output ports have been determined, a check is carried out, on each virtual channel $VC_i$, to ensure that the minimum time intervals $\Delta T_{i,k}$ between the largest aggregate of packets and the next packet at the various interconnecting nodes encountered, obtained by the relation:

$$\Delta T_{l,K} = T_l - \text{Remainder}\left(\dfrac{\sum\limits_{k=1}^{K}\Delta J_{l,k}}{T_l}\right) - \dfrac{B_{VC_{l,k,l}}}{V}$$

are sufficient to avoid any queue congestion problems caused by bursts that are too close together, by looking to see if they satisfy the inequality:

$$\Delta T \geq (M-1)\dfrac{q_{max}}{V}$$

M being a positive integer at most equal to the number of virtual channels using the interconnecting node output port concerned, chosen according to the dependability required for the transmission.

4. Method according to Claim 2, **characterized in that**, once the jitter components added by the various interconnecting nodes at their various output ports have been determined, a check is carried out, on each virtual channel $VC_i$, to ensure that the minimum time intervals $\Delta T_{i,k}$ between its largest aggregate of packets and the next packet arriving the earliest, at the various interconnecting nodes encountered, obtained by the relation:

$$\Delta T_{l,K} = T_l - \text{Remainder}\left(\dfrac{\sum\limits_{k=1}^{K}\Delta J_{l,k}}{T_l}\right) - \dfrac{B_{VC_{l,k,l}}}{V}$$

are sufficient to avoid any queue congestion problems caused by bursts that are too close together, by looking to see if they satisfy the inequality:

$$\Delta T_k \geq (M-1)\frac{q_{max}}{V} + \frac{Sup\left\{\underset{1 \leq l \leq N}{\text{Max aggregate size}_{VC_l}}\right\}}{V} - \frac{\text{Max aggregate size}_{VC_k}}{V}$$

for a $VC_k$.

M being a positive integer at most equal to the number of virtual channels using the interconnecting node output port concerned, chosen according to the dependability required for the transmission.

**Patentansprüche**

1. Verfahren zur Dimensionierung eines Paketvermittlungs-Kommunikationsnetzes vom deterministischen Typ (20), das in Verbindung zu bringende Einrichtungen (10 bis 18) bedient und miteinander und mit den Einrichtungen über Verbindungen von physikalischen Anschlussverbindungen verbundene Verbindungsknoten aufweist, wobei dieses Verfahren darin besteht, eine Liste der zwischen den verschiedenen vom Netz (20) anzuschließenden Einrichtungen (10 bis 18) weiterzuleitenden Informationsflüsse zu erstellen, eine Netztopologie (72) vorzuschlagen, die an die geographische Anordnung der vom Netz (20) zu verbindenden Einrichtungen (10 bis 18) und an die Größen der Informationsflüsse angepasst ist, die zwischen den Einrichtungen (10 bis 18) ausgetauscht werden sollen, wobei die Netztopologie (72) aus der Definition virtueller Pfade VC für die Weiterleitung der verschiedenen Informationsflüsse und aus einer Vermaschung von Verbindungsknoten besteht, die miteinander und mit den Einrichtungen (10 bis 18) über physikalische Anschlussleitungen verbunden sind, die diese virtuellen Pfade tragen, in Höhe jedes Verbindungsknotens die maximalen Verzögerungen, die in die Übertragungen der Pakete durch die Jitter-Phänomene, die von ihnen selbst bewirkt werden, eingeführt werden, und die bereits von den Paketen überwundenen Verbindungsknoten zu schätzen, zu überprüfen, ob diese maximalen Verzögerungen mit vorgegebenen Grenzwerten kompatibel sind, und die für das Netz (20) vorgeschlagene Topologie (72) nachzubessern, so lange diese Kompatibilität nicht erreicht ist, wobei dieses Verfahren **dadurch gekennzeichnet ist, dass** in einem Netz (20), in dem die Pakete alle die gleiche Weiterleitungsgeschwindigkeit V auf den die Verbindungsknoten untereinander und mit den Einrichtungen verbindenden physikalischen Anschlussleitungen haben, die Schätzung der maximalen Verzögerungszeiten, die durch das Jitter-Phänomen eingeführt werden, über die Bestimmung der Jitter-Komponente $\Delta J_{k,j}$ geht, die von einem Verbindungsknoten k in Höhe eines seiner Ausgangsports $S_j$ hinzugefügt wird, der über einen Pufferspeicher (30), der eine Warteschlange aufnimmt, und über eine Multiplexvorrichtung (31) mit N seiner Eingangsports $E_i$ in Verbindung steht, wobei diese Bestimmung der Jitter-Komponente $\Delta J_{k,j}$ in dem Fall, in dem jeder Paketfluss eines virtuellen Pfads VC, der in den Pufferspeicher über einen Eingangsport $E_i$ eingeht, zwischen einem Aggregat von Paketen und dem darauf folgenden Paket oder Aggregat von Paketen einen ausreichenden Mindestzeitintervall aufweist, um ein ausreichendes Entleeren des Pufferspeichers zu ermöglichen, damit sein Überlauf bei Empfang des folgenden Pakets oder Aggregats von Paketen verhindert wird, durch die Anwendung der folgenden Beziehung durchgeführt wird:

$$\Delta J_{k,i} = \frac{Q}{V} = \frac{\sum_{i=1}^{N} B_l - Sup\{B_l\}}{V}$$

wobei Q die maximale Bitmenge der Warteschlange ist, die ausgehend von der folgenden Beziehung geschätzt wird:

$$Q = \sum_{l=1}^{N} B_l - Sup\{B_l\}$$

wobei N die Anzahl von Paketflüssen ist, die zum betrachteten Ausgangsport konvergieren können, d.h. die Anzahl von virtuellen Pfaden, die den Verbindungsknoten durchqueren und zum betrachteten Ausgangsport $S_j$ konvergieren,

wobei $B_l$ die maximale Größe in Bits eines Aggregats von Paketen ist, das auf einem virtuellen Pfad $VC_l$ über einen Eingangsport $E_i$ ankommen kann, maximale Größe, die ebenfalls durch die folgende Beziehung ausgedrückt werden kann:

$$B_l \;=\; M_l \;\times\; q_{max}$$

wobei $M_l$ die maximale Anzahl von Paketen in einem Aggregat von Paketen ist, das auf einem virtuellen Pfad $VC_l$ über einen Eingangsport $E_i$ ankommen kann, und $q_{max}$ die maximale Anzahl von Bits eines Pakets ist.

2. Verfahren nach Anspruch 1, **dadurch gekennzeichnet, dass** die maximale Größe $B_l$ in Bits eines Aggregats von Paketen, das sich auf einem virtuellen Pfad $VC_l$ in Höhe eines Eingangsports $E_i$ eines Verbindungsknotens des Netzes präsentieren kann, gleich der Größe des größten Aggregats von Paketen $B_{VC_{l,i,k}}$ genommen wird, das sich auf den virtuellen Pfaden $VC_l$ präsentieren kann, die über den Eingangsport $E_i$ des betrachteten Verbindungsknotens k gehen:

$$B_l = Sup\{B_{VC_{l,i,k}}\}$$

wobei die Größe des größten Aggregats von Paketen $B_{VC_{l,i,k}}$, das sich auf einem virtuellen Pfad $VC_l$ präsentieren kann, der über den Eingangsport $E_i$ des betrachteten Verbindungsknotens k geht, ausgehend von dem folgenden Beziehungssystem erhalten wird:

$$\begin{cases} B_{VC_{l,i,k}} = 1 + \text{ganzzahliger Teil}\left(\dfrac{\sum_{k=1}^{K-1}\Delta J_{l,k}}{T_l}\right)\times q_{max} & \text{für} \quad \sum_{k=1}^{K-1}\Delta J_{l,k} \geq T_l \quad \text{und} \quad \sum_{k=1}^{K-1}\Delta J_{l,k} < T_l - \dfrac{q_{max}}{V} \\[4ex] B_{VC_{l,i,k}} = 2 & \text{für} \quad T_l - \dfrac{q_{max}}{V} \leq \sum_{k=1}^{K-1}\Delta J_{l,k} < T_l \end{cases}$$

wobei K die Anzahl von Verbindungsknoten ist, die von einem betrachteten virtuellen Pfad durchquert werden, und der Index k die Verbindungsknoten markiert, die von einem betrachteten virtuellen Pfad in der Reihenfolge durchquert werden, in der sie von den Paketen durchquert werden,

wobei die verschiedenen Jitter-Komponenten $\Delta J_{l,k}$ schrittweise bestimmt werden, indem sie die verschiedenen virtuellen Pfade von ihren Anfängen bis zu ihren Enden durchlaufen.

3. Verfahren nach Anspruch 2, **dadurch gekennzeichnet, dass**, wenn die von den verschiedenen Verbindungsknoten in Höhe ihrer verschiedenen Ausgangsports hinzugefügten Jitter-Komponenten bestimmt sind, auf jedem virtuellen Pfad $VC_l$ überprüft wird, ob die Mindestzeitintervalle $\Delta T_{l,k}$ zwischen dem größten Aggregat von Paketen und dem nächsten Paket in Höhe der verschiedenen angetroffenen Verbindungsknoten, die durch die folgende Beziehung erhalten werden:

$$\Delta T_{l,K} = T_l - Rest\left(\frac{\sum_{k=1}^{K}\Delta J_{l,k}}{T_l}\right) - \frac{B_{VC_{l,k,j}}}{V}$$

ausreichen, um jedes Problem einer Überfüllung der Warteschlangen zu vermeiden, das durch zu schnell aufeinander folgende Bursts verursacht wird, indem untersucht wird, ob sie die Ungleichheit erfüllen:

$$\Delta T \geq (M-1)\frac{q_{max}}{V}$$

wobei M eine positive ganze Zahl höchstens gleich der Anzahl von virtuellen Pfaden ist, die über den Ausgangsport des betrachteten Verbindungsknotens laufen, ausgewählt in Abhängigkeit vom für die Übertragung geforderten Sicherheitsgrad.

4. Verfahren nach Anspruch 2, **dadurch gekennzeichnet, dass**, wenn die von den verschiedenen Verbindungsknoten in Höhe ihrer verschiedenen Ausgangsports hinzugefügten Jitter-Komponenten bestimmt sind, auf jedem virtuellen Pfad VC$_l$ überprüft wird, ob die Mindestzeitintervalle $\Delta T_{l,k}$ zwischen seinem größten Aggregat von Paketen und dem am ehesten ankommenden nächsten Paket in Höhe der verschiedenen angetroffenen Verbindungspunkte, die durch die folgende Beziehung erhalten werden:

$$\Delta T_{l,K} = T_l - Rest\left(\frac{\sum_{k=1}^{K}\Delta J_{l,k}}{T_l}\right) - \frac{B_{VC_{l,k,j}}}{V}$$

ausreichen, um jedes Problem der Überfüllung der Warteschlangen zu vermeiden, das durch zu schnell aufeinander folgende Bursts verursacht wird, indem untersucht wird, ob sie die Ungleichheit erfüllen:

$$\Delta T_k \geq (M-1)\frac{q_{max}}{V} + \frac{\underset{1\leq l\leq N}{Sup}\{\text{Größe Aggregat max}_{VC_l}\}}{V} - \frac{\text{Größe Aggregat max}_{VC_k}}{V}$$

für ein VC$_k$,
wobei M eine positive ganze Zahl höchstens gleich der Anzahl von virtuellen Pfaden ist, die über den Ausgangsport des betrachteten Verbindungsknotens laufen, ausgewählt in Abhängigkeit vom für die Übertragung geforderten Sicherheitsgrad.

FIG.1

FIG.2

FIG.3

$M_i$ (PAQUETS)

$B_i = M_i \times Q_{max}$ (BITS)

FLUX 1

$N \times V$

$V$

$\sum\limits_{i=1}^{N} B_i - \text{Sup} \{B_i\}$

FLUX N

$\text{Sup} \{B_i\}$

FIG.4

$\Sigma B_i^i$

$M_i$ (PAQUETS)

$B_i = M_i \times Q_{max}$ (BITS)

FLUX 1

FLUX N

$\Delta T$

$Sup \{B_i\}$

## FIG.5

$VC_1$

$VC_2$

$VC_3$

## FIG.6

$J_{i,K}$

62

60    61

$T_i$

## FIG.7

70 — DÉFINITION D'UNE TOPOLOGIE RÉSEAU

71 — LISTAGE DES CONTRAINTES SUR LES FLUX D'INFORMATIONS

72 — TOPOLOGIE RÉSEAU :
_ CHEMINS VIRTUELS
_ NŒUDS
_ LIAISONS PHYSIQUES

73 — CONTRAINTES DE TRAFFIC LATENCES ET RÉGULARITÉ DES FLUX D'INFORMATIONS

74 — VÉRIFICATION DU RESPECT DES CONTRAINTES PAR LA TOPOLOGIE

75 — LISTE DES CHEMINS VIRTUELS DÉFECTUEUX

VIDE ?

OUI — FIN
ADOPTION DE LA TOPOLOGIE PROPOSÉE

NON

76 — MODIFICATION DE LA TOPOLOGIE PROPOSÉE (CHEMINS VIRTUELS, NŒUDS, LIAISONS PHYSIQUES)

# FIG. 8